# EUROPEAN PATENT APPLICATION

(11) **EP 1 557 758 A1**
(43) Date of publication of application: **27.07.2005**
(21) Application number: 03770005.1
(22) Date of filing: 30.10.2003
(51) Int. Cl.: G06F 9/445, G06F 15/16

(54) **SERVICE SOFTWARE ACQUIRING METHOD, SYSTEM AND ELECTRONIC COMMUNICATION DEVICE USED THEREFOR**

(30) Priority: 01.11.2002 JP 2002319605; 28.04.2003 JP 2003124209
(71) Applicant: MATSUSHITA ELECTRIC INDUSTRIAL CO., LTD., Kadoma-shi, Osaka 571-8501 (JP)
(72) Inventor: NAKAMURA, Tomonori, Osaka-shi, Osaka 531-0064 (JP); OASHI, Masahiro, Kyotanabe-shi, Kyoto 610-0331 (JP); WAKI, Yasushi, Soraku-gun, Kyoto 619-0232 (JP); NISHIMURA, Yasushi, Shijonawate-shi, Osaka 575-0003 (JP)
(74) Representative: Gassner, Wolfgang, Dr.
(86) International application number: PCT/JP2003/013900
(87) International publication number: WO 2004/040444

(57) **Abstract**

An object is to provide a method for making it possible to exchange information between a local host and a remote host even if necessary software is not previously prepared. A local host (1) requests a service administration host (4) to start a desired remote service. In response to the request to start the remote service, the service administration host (4) selects remote hosts (2) that are capable of sharing the remote service with the local host, and returns information as to the remote hosts (2) to the local host. Based on the returned information as to the remote hosts (2), the local host (1) selects a remote host (2) with which it desires to share the remote service, and instructs the remote host (2) to download, from the service administration host (4), software for sharing the remote service. The remote host (2) downloads, from the service administration host (4), necessary software as instructed.

## Description

### TECHNICAL FIELD

The present invention relates to a method for acquiring software for performing remote processing, and more specifically to a method for acquiring software for performing remote processing for having information shared between electronic communication devices, such as a digital still camera (DSC), a digital video camera (DVC), a mobile phone, a digital television (DTV), a home server, a set-top box (STB), and a safe-deposit box, that are connected to a service administration host via a network.

### BACKGROUND ART

Conventionally, in the case of performing a desired process with an electronic communication device, such as a digital still camera (DSC), a digital video camera (DVC), a mobile phone, a portable device, a digital television (DTV), a home server, a set-top box (STB), and a safe-deposit box, that is connected to a service administration host via a network or radio, if software necessary for performing the desired process is not stored in the device itself, the necessary software is downloaded from the service administration host, to perform the desired process (see, for example, Japanese Laid-Open Patent Publication No. 2002-169621).

However, in such a conventional structure, the electronic communication device that has downloaded software performs a process only within itself, and is not capable of performing a predetermined process in association with another electronic communication device.

In addition, electronic communication devices are not provided with information as to addresses of other electronic communication devices, and therefore, even if an electronic communication device desires another electronic communication device to perform some process, that electronic communication device is incapable of giving commands to the other electronic communication device.

Note that it is conceivable to configure the electronic communication devices to include applications that enable the electronic communication devices to share a predetermined process. However, since there are various kinds of electronic communication devices, it is unrealistic to provide each electronic communication device with a plurality of pieces of software which correspond to the electronic communication device, in view of memory limitations.

### DISCLOSURE OF THE INVENTION

Therefore, an object of the present invention is to provide a method for enabling remote processing to be performed between electronic communication devices, even if the electronic communication devices neither previously possess address information of the electronic communication devices nor previously possess software for having information shared between the electronic communication devices.

To solve the above-described problems, the present invention provides a method for acquiring software necessary for a remote service that is desired to be shared between a local host and a remote host which are connected via a network, from a service administration host that has the software stored therein, the method including: a step in which the local host requests the service administration host to start a desired remote service; a step in which, in response to the request to start the remote service, the service administration host chooses remote hosts that are capable of sharing the remote service with the local host, and returns to the local host information as to the remote hosts; a step in which, based on the returned information as to the remote hosts, the local host selects a remote host with which the local host desires to share the remote service, and instructs the remote host to download from the service administration host the software for sharing the remote service; and a step in which the remote host downloads from the service administration host the necessary software which the remote host has been instructed to download.

Accordingly, since the remote host is able to download the necessary software from the service administration host in response to a request from the local host, it is unnecessary for the remote host side to be previously provided with the necessary software. That is, it becomes possible that software which is regularly unused and unnecessary is acquired as need arises.

Also, the present invention provides a method for acquiring software necessary for a remote service that is desired to be shared between a local host and a remote host which are connected via a network, from a service administration host that has the software stored therein, the method including: a step in which the local host requests the service administration host to start a desired remote service; a step in which, in response to the request to start the remote service, the service administration host chooses remote hosts that are capable of sharing the remote service with the local host, and returns to the local host information as to the remote hosts; a step in which, based on the returned information as to the remote hosts, the local host selects a remote host with which the local host desires to share the remote service, and instructs the service administration host to transmit to the remote host the software for sharing the remote service; and a step in which, in response to the instruction to transmit the software, the service administration host transmits the necessary software to the remote host.

Accordingly, necessary software is transmitted from the service administration host to the remote host in accordance with an instruction from the local host, therefore it is made possible for the remote host to acquire the necessary software even if the local host does not know the address of the remote host, while making it possible to eliminate the need for the remote host side to be previously provided with the necessary software. In other words, it becomes possible that software which is regularly unused and unnecessary is acquired as need arises.

Also, the present invention provides a method for acquiring software necessary for a remote service that is desired to be shared between a local host and a remote host which are connected via a network, from a service administration host that has the software stored therein, wherein the network has a certificate authority host for authenticating the local host connected thereto, the method including: a step in which the local host acquires a registered user key from the certificate authority host; a step in which the local host transmits, to the service administration host, a request to start a desired remote service together with the user key; a step in which, in response to the request to start the remote service, the service administration host chooses, from among remote hosts which are accessible based on the user key, remote hosts that are capable of sharing the remote service with the local host, and returns to the local host information as to the remote hosts; a step in which, based on the returned information as to the remote hosts, the local host selects a remote host with which the local host desires to share the remote service, and transmits to the remote host an instruction to download from the service administration host the software for sharing the remote service together with the user key; and a step in which, if a check of the user key is certified in association with the certificate authority host, the remote host downloads from the service administration host the necessary software which the remote host has been instructed to download.

Accordingly, the remote host is able to download the necessary software from the service administration host in response to a request from the local host, therefore it is possible to eliminate the need for the remote host side to be previously provided with the necessary software. That is, it becomes possible that software which is regularly unused and unnecessary is acquired as need arises. Moreover, the remote host checks a user key to determine whether an unauthorized process is intended to be performed, therefore it is possible to provide safe service.

Also, the present invention provides a method for acquiring software necessary for a remote service that is desired to be shared between a local host and a remote host which are connected via a network, from a service administration host that has the software stored therein, wherein the network has a certificate authority host for authenticating the local host connected thereto, the method including: a step in which the local host acquires a registered user key from the certificate authority host; a step in which the local host transmits to the service administration host a request to start a desired remote service together with the user key; a step in which, in response to the request to start the remote service, the service administration host chooses, from among remote hosts which are accessible based on the user key, remote hosts that are capable of sharing the remote service with the local host, and returns to the local host information as to the remote hosts; a step in which, based on the returned information as to the remote hosts, the local host selects a remote host with which the local host desires to share the remote service, and transmits to the service administration host an instruction to transmit to the remote host the software for sharing the remote service together with the user key; and a step in which, in response to the instruction to transmit the software, the service administration host transmits the necessary software to the remote host after a check=of the user key is certified in association with the certificate authority host.

Accordingly, necessary software is transmitted from the service administration host to the remote host in accordance with an instruction from the local host, therefore it is made possible for the remote host to acquire the necessary software even if the local host does not know the address of the remote host, while making it possible to eliminate the need for the remote host side to be previously provided with the necessary software. That is, it becomes possible that software which is regularly unused and unnecessary is acquired as need arises. Furthermore, the service administration host checks a user key to determine whether an unauthorized process is intended to be performed, therefore it becomes possible to provide safe service.

Preferably, the information as to the remote hosts is addresses of the remote hosts that are assigned on the network.

This makes it possible for the local host to identify a remote host on the network even if the address of the remote host on the network is unknown thereto.

Preferably, there is further included a step in which the local host downloads from the service administration host the software necessary for sharing the remote service.

Accordingly, even in the case where the necessary software does not exist within the local host, it is possible to download the software. Therefore, it becomes possible for the local host and the remote host to share a desired service.

Preferably, there is further included a step in which, if a plurality of remote hosts that are capable of sharing the remote service are present, the local host displays a remote host that is accessible.

Accordingly, it becomes possible for the local host side to select a plurality of remote hosts that are capable of sharing the remote service. Therefore, it becomes possible to select an optimal remote host.

Preferably, there is further included a step of communicating information between the remote host and the local host by utilizing the software downloaded by the remote host.

Accordingly, it becomes possible to exchange information between the remote host and the local host. For example, it becomes possible to perform a process of forwarding data or the like stored in the remote host to the local host.

Preferably, in the step of communicating information, still image data possessed by the local host or the remote host is communicated .

Accordingly, it becomes possible to exchange still image data between the local host and the remote host.

Preferably, in the step of communicating information, video image data possessed by the local host or the remote host is communicated.

Accordingly, it becomes possible to exchange video image data between the local host and the remote host.

Preferably, in a case where information is communicated between the local host and the selected remote host, there are further included: a step in which the local host or the selected remote host transmits the information to a remote host different from the selected remote host, the different remote host being capable of performing a predetermined process on the information that is communicated; and a step in which, after performing the predetermined process, the different remote host transmits the processed information to the selected remote host or the local host.

Accordingly, even in the case where the local host and the remote host are not capable of having information shared only by themselves, it is possible to transmit the information to another remote host and make the information sharable. Therefore even in the case where the local host and the remote host are not capable of having information shared only by themselves, it can be made possible to share the information therebetween.

Preferably, the predetermined process is a process of converting a format of the information.

Accordingly, even if the format is not compatible, it is possible to exchange the information between the remote host and the local host, because format conversion is performed by an intermediate entity.

Preferably, the predetermined process is a process of converting a resolution of the information to a predetermined resolution.

Accordingly, even if the resolutions of the local host and the remote host are different from each other, it is possible to exchange information therebetween, because resolution conversion is performed by an intermediate entity.

Also, the present invention provides a method for acquiring software necessary for a remote service that is desired to be shared between a local host and a remote host which are connected via a network, from a service administration host that has the software stored therein, the method including: a step in which the local host selects a remote host that is capable of executing the software necessary for the remote service that is desired to be shared; a step of instructing the selected remote host to download the software from the service administration host; and a step in which the remote host downloads from the service administration host the necessary software which the remote host has been instructed to download.

Accordingly, the remote host is able to download the necessary software from the service administration host in response to an instruction from the local host, therefore it is made possible to eliminate the need for the remote host side to be previously provided with the necessary software. That is, it becomes possible that software which is regularly unused and unnecessary is acquired, as need arises.

Preferably, there is further included a step of communicating information between the remote host and the local host by utilizing the software downloaded by the remote host.

Accordingly, it becomes possible to exchange information between the remote host and the local host. For example, it becomes possible to perform a process of forwarding data or the like stored in the remote host to the local host.

Preferably, there is further included a step in which the local host downloads from the service administration host the software necessary for sharing the remote service.

Accordingly, even in the case where the necessary software does not exist within the local host, it is possible to download the software. Therefore, it becomes possible for the local host and the remote host to share a desired service.

Preferably, the remote host keeps the acquired software stored therein, and in the step in which the remote host downloads from the service administration host: if an instruction to download the necessary software is given from the local host, the remote host determines whether software identical to the necessary software is included in the stored software; if no identical software is included, the remote host downloads the necessary software from the service administration host; and if any identical software is included, without downloading the necessary software from the service administration host, the local host and the remote host carry out the remote service by employing the stored software.

Accordingly, previously downloaded software is reused, therefore it becomes possible to reduce an amount of communication for downloading.

Preferably, in the step in which the remote host downloads from the service administration host, further: if the identical software is included, a version of the necessary software and a version of the stored software are compared; and if the version of the stored software is older, the stored software is discarded, and the necessary software is downloaded from the service administration host.

Thus, the remote host downloads the latest version of software. Therefore, even in the case where the remote host has cached software, it is possible to prevent difference in software version between the local host and the remote host.

Preferably, the remote host keeps the acquired software stored therein, and in the step in which the service administration host transmits the necessary software to the remote host: the service administration host inquires of the remote host whether the necessary software is stored; in response to the inquiry from the service administration host, the remote host determines whether software identical to the necessary software is stored, and the remote host reports a result of the determination to the service administration host; and in response to the report from the remote host, if the identical software is not stored, the service administration host transmits the necessary software to the remote host.

Accordingly, previously downloaded software is reused, therefore it becomes possible to reduce an amount of communication for downloading.

Preferably, when the remote host determines whether the software identical to the necessary software is stored, the remote host reports to the service administration host that the identical software is not stored if an older version of the software is stored.

Thus, the service administration host transmits the latest version of software. Therefore, even in the case where the remote host has cached software, it is possible to prevent difference in software version between the local host and the remote host.

Preferably, the local host keeps the acquired software stored therein, and in the step in which the local host downloads from the service administration host: the local host determines whether software identical to the necessary software is included in the stored software; if no identical software is included, the local host downloads the necessary software from the service administration host; and if any identical software is included, without downloading the necessary software from the service administration host, the local host and the remote host carry out the remote service by employing the stored software.

Accordingly, previously downloaded software is reused, therefore it becomes possible to reduce an amount of communication for downloading.

Preferably, in the step in which the local host downloads from the service administration host, further: if the identical software is included, a version of the necessary software and a version of the stored software are compared; and if the version of the stored software is older, the stored software is discarded, and the necessary software is downloaded from the service administration host.

Accordingly, the local host downloads the latest version of software. Therefore, even in the case where the local host has cached software, it is possible to prevent difference in software version between the local host and the remote host.

Preferably, there are further included: a step in which the local host requests from the service administration host a list of remote services that are usable to the local host; a step in which, in response to the request from the local host, the service administration host recognizes each of the remote services that are usable to the local host; a step in which the service administration host recognizes a remote host that is capable of sharing the recognized remote service with the local host; a step in which the service administration host reports to the local host a service list that shows a combination of the remote service and the remote host; and a step in which the local host displays the reported service list.

Accordingly, it becomes possible for a user of the local host to simultaneously recognize a service available through the use of the local host and a remote host which is capable of sharing the service.

Preferably, there are further included: a step in which the local host requests from the service administration host a list of remote hosts that are accessible by the local host; a step in which, in response to the request from the local host, the service administrationhost recognizes the remote hosts that are accessible by the local host; a step in which the service administration host recognizes, with respect to each of the recognized remote hosts, a remote service that is shareable with the local host; a step in which the service administration host reports to the local host a remote host list that shows a combination of the remote host and the remote service; and a step in which the local host displays the reported remote host list.

Accordingly, it becomes possible for a user of the local host to simultaneously recognize an available remote host and a service which is sharable with the remote host.

Preferably, there are further included: a step in which the local host requests, from a list relaying host which is connected to the network, a list of remote services that are usable to the local host; a step in which, in response to the request from the local host, the list relaying host requests, from the service administration host, the list of remote services that are usable to the local host; a step in which, in response to the request from the list relaying host, the service administration host recognizes each of the remote services that are usable to the local host; a step in which the service administration host recognizes a remote host that is capable of sharing the recognized remote service with the local host; a step in which the service administration host reports to the local host a service list that shows a combination of the remote service and the remote host; and a step in which the local host displays the reported service list.

Accordingly, it becomes possible for a user of the local host to simultaneously recognize a service available with the use of the local host and a remote host capable of sharing the service.

Preferably, there are further included: a step in which the local host requests, from a list relaying host which is connected to the network, a list of remote hosts that are accessible by the local host; a step in which, in response to the request from the local host, the list relaying host requests from the service administration host the list of remote hosts that are usable to the local host; a step in which, in response to the request from the list relaying host, the service administration host recognizes the remote hosts that are accessible by the local host; a step in which the service administration host recognizes, with respect to each of the recognized remote hosts, a remote service that is shareable with the local host; a step in which the service administration host reports to the local host a remote host list that shows a combination of the remote host and the remote service; and a step in which the local host displays the reported remote host list.

Accordingly, it becomes possible for a user of the local host to simultaneously recognize an available remote host and a service which is sharable with the remote host.

Also, the present invention provides a system for executing a desired process between at least two or more electronic communication devices that are connected via a network, the system including: a service administration host that is connected to the network and has stored therein software necessary for executing the desired process; among the at least two or more electronic communication devices, a first electronic communication device operated by a user, and a second electronic communication device that is capable of executing the desired process by operating in association with the first electronic communication device; and association recognition means for recognizing an association between the first electronic communication device and the second electronic communication device, wherein the first electronic communication device includes software acquisitionmeans for, when executing the desired process, allowing the second electronic communication device recognized by the association recognition means to acquire the software stored in the service administration host.

Accordingly, the second electronic communication device is able to acquire software necessary for executing a desired process, therefore it is possible to eliminate the need for the second electronic communication device to be previously provided with the software. That is, it becomes possible that software which is regularly unused and unnecessary is acquired as need arises.

Preferably, the software acquisition means instructs the second electronic communication device selected by the user to download the software from the service administration host.

Preferably, the software acquisition means instructs the service administration host to transmit the software to the second electronic communication device selected by the user.

Preferably, when recognizing the association, the association recognition means recognizes the second electronic communication device that is capable of operating in association with the first electronic communication device by authenticating the user operating the first electronic communication device.

Preferably, the association recognition means is provided within a home server for a user who possesses the first electronic communication device.

Preferably, the association recognition means is provided within the service administration host.

Also, the present invention provides an electronic communication terminal that is connected to a network and which executes a predetermined process by operating in association with a remote host connected to the network, the terminal including: information acquisition means for acquiring, from a computer device connected to the network, information as to remote hosts that are capable of executing the predetermined process in association; remote host specification means for, based on the information acquired by the information acquisition means, specifying a remote host that is capable of executing the predetermined process in association; and software acquisition request means for causing the remote host specified by the remote host specification means to acquire software for executing the predetermined process, the software being stored in a service administration host connected to the network.

Accordingly, it becomes possible for the electronic communication device to allow the remote host to acquire software necessary for executing a desired process.

Preferably, there is further included user key acquisition means for acquiring a user key that is registered in a certificate authority host connected to the network; and the software acquisition request means transmits the user key acquired by the user key acquisition means together with a request to acquire the software for executing the predetermined process.

Accordingly, it becomes possible for the electronic communication device to allow the remote host to acquire software necessary for executing a desired process. Moreover, the remote host checks a user key to determine whether an unauthorized process is intended to be performed, therefore it is possible to provide safe service.

Also, the present invention provides an electronic communication terminal that is connected to a network and which executes a predetermined process by operating in association with a local host connected to the network, the terminal including: software acquisition request reception means for accepting, from the local host, a request to acquire software for executing the predetermined process; and software acquisition means for downloading, from a service administration host connected to the network, the software for executing the predetermined process.

Accordingly, it is possible for the electronic communication device to acquire software necessary for executing a desire process in accordance with an instruction from the local host.

Preferably, there is further included user key check means for requesting a certificate authority host connected to the network to check a user key; and in a case where the user key accompanies the request to acquire the software received by the software acquisition request reception means, if the user key check means checks the user key, the software acquisition means downloads, from the service administration host, the software for executing the predetermined process.

Accordingly, it is possible for the electronic communication device to acquire software necessary for executing a desired process in accordance with an instruction from the local host. Moreover, the electronic communication device checks a user key to determine whether an unauthorized process is intended to be performed, therefore it is possible to provide safe service.

### BRIEF DESCRIPTION OF THE DRAWINGS

FIG. 1 is a diagram showing an overall structure of a service download system according to a first embodiment of the present invention.
FIG. 2 is a diagram showing exemplary information stored in a service administration host 4.
FIG. 3 is a block diagram showing an exemplary hardware configuration for a local host 1 and a remote host 2 according to the first embodiment of the present invention.
FIG. 4 is a flowchart for explaining an operation of the entire system according to the first embodiment of the present invention.
FIG. 5 is a diagram showing exemplary information which is returned from the service administration host 4 to the local host 1 in the system according to the first embodiment of the present invention.
FIG. 6 is a diagram showing exemplary additional information which is received by the local host 1 from the service administration host 4 in the system according to the first embodiment of the present invention.
FIG. 7 is a flowchart showing an operation of a remote host according to a second embodiment of the present invention.
FIG. 8A is a diagram showing a correspondence between versions of software according to the second embodiment of the present invention.
FIG. 8B is a diagram showing difference between versions of software according to the second embodiment of the present invention.
FIG. 9 is a flowchart showing an operation of a local host according to a third embodiment of the present invention.
FIG. 10 is a flowchart showing operations of the local host and the service administration host during a service list acquisition process (step S601).
FIG. 11 is a flowchart showing operations of the local host and the service administration host in the case of acquiring a list of accessible remote hosts.
FIG. 12 is a diagram showing an overall structure of a service software acquisition system according to a sixth embodiment of the present invention.
FIG. 13 is a flowchart for explaining an operation of the entire system according to the sixth embodiment of the present invention.

### BEST MODE FOR CARRYING OUT THE INVENTION

### (first embodiment)

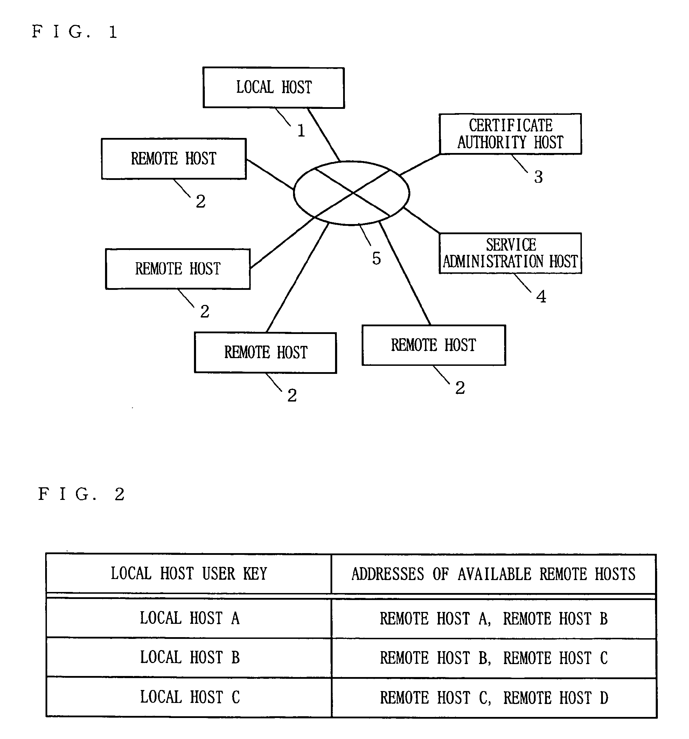

FIG. 1 is a diagram showing an overall structure of a service software acquisition system according to a first embodiment of the present invention. In FIG. 1, the service software acquisition system includes a local host 1, four remote hosts 2, a certificate authority host 3, and a service administration host 4. Note that although the local host 1, the certificate authority host 3, and the service administration host 4 are each described herein as being single in number, they can be multiple in number. In addition, the number of remote hosts 2 may be less than or greater than four.

The local host 1 is an electronic communication device such as a digital still camera (DSC), a digital video camera (DVC), a mobile phone, a portable device, a digital television (DTV), a home server, a set-top box (STB), a safe-deposit box, or the like. The remote hosts 2 are each an electronic communication device such as a digital still camera (DSC), a digital video camera (DVC), a mobile phone, a portable device, a digital television (DTV), a home server, a set-top box (STB), a safe-deposit box, or the like.

The certificate authority host 3 is a computer in which user keys of the local host 1 and the remote hosts 2 are registered. The certificate authority host 3 may be a home server placed in a home, a server placed at an Internet provider or the like, or a server placed at the premises of a company.

The service administration host 4 is a computer that administers addresses (e.g., IP addresses) of the local host 1 and the remote hosts 2. Typically, the service administration host 4 is a server on the Internet, or the like.

The local host 1, the remote hosts 2, the certificate authority host 3, and the service administration host 4 are connected via a network 5. The network 5 may be a wire network, a wireless network, or a combination thereof. Typically, the network 5 is a network composed of a combination of the Internet, a telephone network, a mobile phone network, a PHS network, an ADSL network, and so on.

If the local host 1 or a remote host 2 makes a request to acquire a userkey correspondingthereto,the certificate authority host 3 returns the user key, which has previously been registered. Also, if the local host 1, the remote host 2, or the service administration host 4 makes a request to check a user key, the certificate authority host 3 checks the user key and returns a check result. The term "user key" as used herein refers to an identifier for identifying a user.

The service administration host 4 has stored therein information as to any remote host 2 accessible to the local host 1 via the network 5. The user key of a user who uses the local host 1 (hereinafter simply referred to as a "local host user key") and the address (e.g., IP address) of the remote host 2 are used to associate the local host 1 with the remote host 2. In addition to the address of the remote host 2, the service administration host 4 also has stored therein information as to hardware characteristics, etc., of the remote host 2.

FIG. 2 is a table showing exemplary information stored in the service administration host 4. In FIG. 2, it is assumed that "REMOTE HOST A," "REMOTE HOST B," "REMOTE HOST C," and "REMOTE HOST D" represent information as to the addresses, e.g., IP addresses, of the individual remote hosts. In addition, it is assumed that "LOCAL HOST A," "LOCAL HOST B," and "LOCAL HOST C" represent their respective local host user keys. As shown in FIG. 2, information as to remote hosts accessible to local hosts via the network 5 is represented such that the local host user keys and the addresses of the remote hosts are associated with each other.

If the local host 1 makes a request to transmit information as to any remote host 2 which can be used by the local host 1, the service administration host 4 refers to the information as shown in FIG. 2 and returns an address of a remote host 2 corresponding to a user key transmitted from the local host 1 and information thereof.

The service administration host 4 has prestored therein software which is required not by the local host alone but which becomes necessary when operating in association with another device (remote host) . Such software is referred to as "remote software" because it is used for remote processing between the local host 1 and a remote host 2. In response to a request from the local host 1, the service administration host 4 provides this software to the local host 1 and/or the remote host 2. In this manner, the service administration host 4 provides the remote software necessary for remote processing. Accordingly, the providing of software by the service administration host 4 is called a "remote software providing service." Hereinafter, it is assumed, unless otherwise noted, that the term "service" or "remote service" refers to the "remote software providing service."

For example, service software (hereinafter simply referred to as "software") is software (which is represented by "SW" in the drawings) for exchanging information between the local host 1 and a remote host 2. In the case where the local host 1 is a mobile phone and the remote host 2 is a digital television or a video recorder, the software is, for example, software for forwarding video image data stored in the mobile phone to the digital television or the video recorder. Conversely, in the case where the local host 1 is a digital television or a video recorder and the remote host 2 is a mobile phone, the software is, for example, software for forwarding video image data stored in the digital television or the video recorder to the mobile phone.

When the local host 1 is used singly, software to be used in another electronic communication device (which in this example is a remote host 2) is not required. Therefore, it is not necessarily required that the local host 1 is previously provided with such software. However, in the case where a process that is difficult to be performed by the local host 1 due to limitations of its own hardware can be executed with hardware of another electronic communication device, if they are enabled to exchange information therebetween, it becomes possible to perform that process efficiently.

For example, consider the case where a mobile phone has become incapable of storing more still or video image because of having stored therein as many still or video images as possible. In this case, the aforementioned process includes, for example, a process of forwarding the still or video image from the mobile phone to another electronic communication device that is capable of storing the still or video image. The aforementioned process also includes, e.g., a process of importing a still or video image from a digital TV to a mobile phone. As such, the service software is software for operating in association with another electronic communication device.

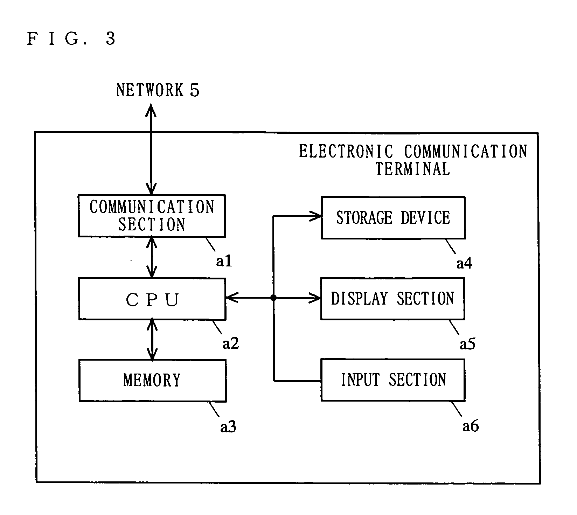

The hardware configurations of the local host 1 and the remote host 2 are known. FIG. 3 is a block diagram showing an exemplary hardware configuration for the local host 1 and the remote host 2 (which are collectively referred to as an "electronic communication terminal" in the drawing) . In FIG. 3, the electronic communication terminal, i.e., the local host 1 or the remote host 2, at least includes: a communication section *a1* for performing communication via a network; a CPU *a2* for controlling operation of the terminal; a memory *a3* for storing a program to be executed by the CPU *a2* and storing necessary data; a storage device *a4*, such as a flash ROM, a hard disk, or the like, which holds data even after the electronic communication terminal is turned off; a display section *a5*, such as a liquid crystal panel or the like, for performing screen display based on control from the CPU *a2*; and an input section *a6*, such as a button switch or the like, for inputting a user instruction. A program for performing an operation as described below is stored in the storage device *a4*. The CPU *a2* reads the program into the memory *a3*, and controls operation of the electronic communication terminal while executing the program. In addition to the components shown in FIG. 3, the local host 1 and the remote host 2 each have components related to a feature thereof. For example, in the case where the local host 1 is a digital television, the local host 1 has a demodulation section for demodulating received broadcast waves, a video/audio decoder for decoding demodulated video and audio data, and so on.

The hardware configurations of the certificate authority host 3 and the service administration host 4 are also known, and, specifically, may be those used in common personal computers and server devices. To realize the present embodiment, it is only necessary that each device has stored therein a program that executes an operation as described below and the CPU of the device reads the program and controls operation of the entire device.

Note that the local host 1 and the remote host 2 each at least need to be provided with the memory *a3* having available storage capacity sufficient to allow operation of a service that is to be downloaded.

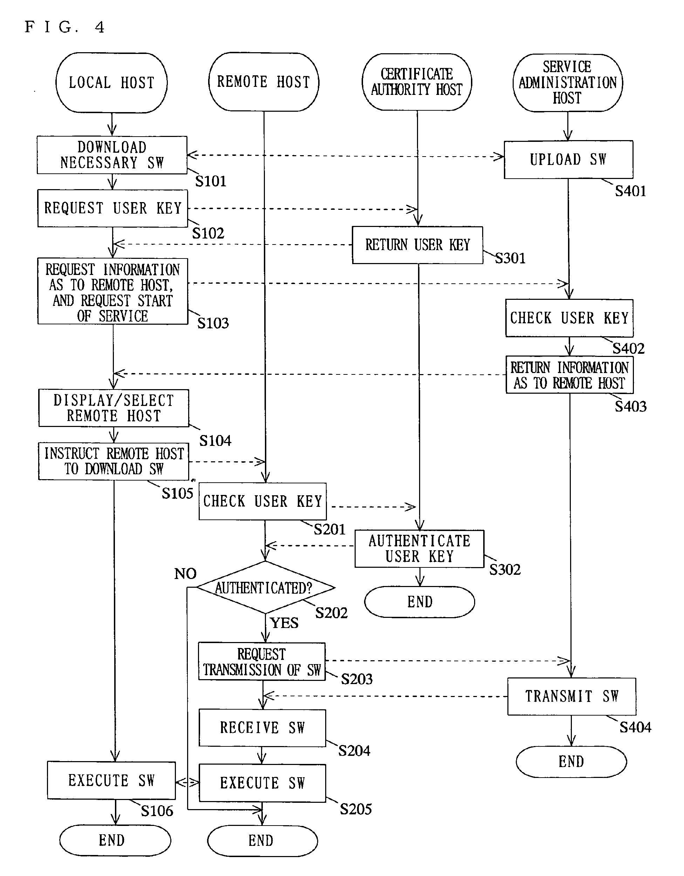

FIG. 4 is a flowchart for explaining an operation of the entire system according to the first embodiment of the present invention. Referring to FIG. 4, the operation of the entire system and an operation of each host are described below. Note that the descriptions given here center on an exemplary case where the local host 1 forwards information such as a still or video image to the remote host 2.

First, the local host 1 determines whether it has software necessary for a remote service for exchanging information with the remote host 2, and, if necessary, performs download from the service administration host 4. In response thereto, the service administration host 4 uploads desired software to the local host 1 (step S401).

Next, the local host 1 requests the certificate authority host 3 to transmit a user key of itself (step S102) . In response thereto, the certificate authority host 3 receives the request from the local host 1, searches information of registered user keys for the user key corresponding to the local host 1, and returns it (step S301).

Next, by transmitting the acquired user key to the service administration host 4, the local host 1 requests the service administration host 4 to return information as to any accessible remote host, thereby making a request to start a desired remote service (step S103). In response thereto, the service administration host 4 checks the transmitted user key (step S402), refers to stored information to acquire information as to remote hosts corresponding to the transmitted user key, and returns it to the local host 1 (step S403).

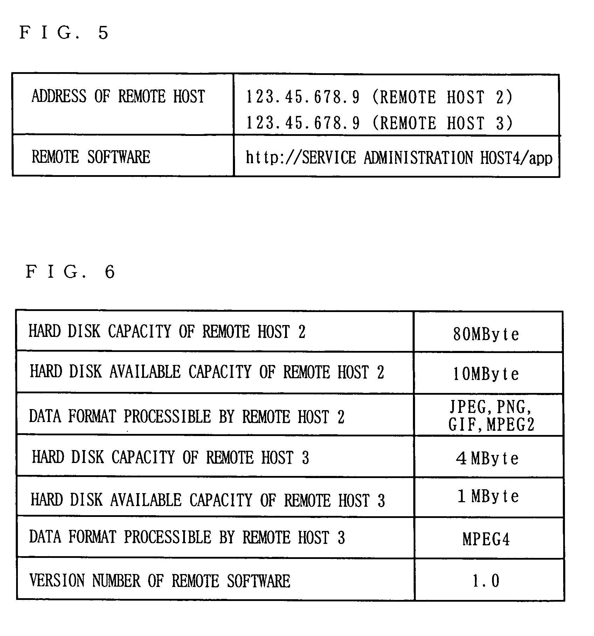

FIG. 5 is a diagram showing exemplary information that is returned from the service administration host 4 to the local host 1. As shown in FIG. 5, the information that is returned from the service administration host 4 to the local host 1 includes at least an address of a remote host that is capable of performing the desired process, and address information of remote software. In the case where no remote host exists that is capable of sharing the remote host service with the local host 1, the field for an address of a remote host, shown in FIG. 5, is blank. In this case, the local host 1 discontinues and terminates processes including and after step S104. An address of the remote software as shown in FIG. 5 is a URL required when the remote host 2 downloads the remote software.

Note that although the example shown in FIG. 5 indicates that the remote software is acquired by using a hypertext transfer protocol (http), it may be acquired by using another protocol, such as a file transfer protocol (ftp) . In addition, in the example shown in FIG. 5, it is assumed that the remote software is provided by the service administration host 4. However, if the service administration host 4 does not hold the remote software, the service administration host 4 may return an address of another service administration host (for example, http://service administration host 5/app, etc.). In addition, the remote software may be subjected to a process such as compression or encryption.

In addition, the service administration host 4 may transmit, to the local host 1, not only the information as shown in FIG. 5 but also additional information, such as hardware properties (specifications or functions: for example, storage capacity, available capacity, a data format of information that can be processed, resolution, processing speed, etc.) of the remote host, and a version of the remote software. FIG. 6 is a diagram showing exemplary additional information. A version number is, for example, data in the form of a numerical value or a character string, which is comparable in size, and a larger version number indicates newer software. Note that FIG. 6 is only meant as an example, and the service administration host 4 may transmit additional information other than that shown therein.

Next, based on the information as to the remote hosts that has been transmitted from the service administration host 4, the local host 1 displays, on the display section *a5*, any remote host having hardware (HW) capable of performing the desired process, and allows the user to select a remote host by using the input section *a6* (step S104). At this time, if a plurality of such remote hosts exist, the local host 1 displays the plurality thereof. Note that if a remote host that satisfies a predetermined criterion exists, the local host 1 may select that remote host automatically.

At this time, if the additional information has been transmitted from the service administration host 4, the local host 1 is able to allow the user to select a remote host more efficiently, by displaying that information as well. In addition, the local host 1 may select and display an optimal one out of a plurality of remote hosts (e.g., one that has hardware that best satisfies a demand of the user, one that processes the demand of the user in the shortest time, a combination of a plurality of pieces of hardware that satisfy the demand of the user, etc.).

With reference to the example shown in FIG. 6, a specific manner in which the user who uses the local host 1 selects a remote host is described. By way of example, assume that the local host 1 is a mobile phone, remote host 2 is a personal computer, and remote host 3 is a video cassette recorder or a DVD recorder. In this case, if it is desired that a content stored in the mobile phone should be forwarded to a remote host, the user will select remote host 2 because a remote host whose hard disk has a larger available capacity is preferable. If it is desired that a content in MPEG4 format which is stored in the mobile phone should be reproduced by a remote host, the user will select remote host 3 because a remote host to be selected needs to be capable of processing data in MPEG4 format. Naturally, the local host 1 may perform such selection automatically by recognizing the details of a desired process.

The information transmitted from the service administration host 4 also includes information as to the addresses of the remote hosts 2. Accordingly, next, based on an address of the selected remote host, the local host 1 instructs the selected remote host to download necessary software (step S105). At this time, the local host 1 transmits, to the remote host, the already acquired user key as well. In the case where a version number of software has been transmitted from the service administration host 4 as the additional information, the local host 1 may transmit a version number of software that the remote host is instructed to download, together with the instruction to download the software.

In response thereto, the remote host 2 requests the certificate authority host 3 to check the received user key (step S201). The certificate authority 3 host, responsive to this, authenticates the user key, determines whether the user key is correct or not, and then transmits an authentication result to the remote host 2 (step S302).

Next, the remote host 2 determines whether it has been authenticated as correct (step S202). If it has not been authenticated, then the remote host 2 terminates the process. On the other hand, if it has been authenticated, the remote host 2 requests the service administration host 4 to transmit software necessary for exchanging information with the local host 1 (step S203). In response thereto, the service administration host 4 transmits the desired software to the remote host 2 (step S404). Then, the remote host 2 receives the software (step S204).

Once the necessary software has been completely downloaded on the remote host side, the environment for exchanging information between the local host 1 and the remote host 2 is established, so that the local host 1 and the remote host 2 perform a necessary process in association with each other (steps S106 and S205), thereby exchanging information (still image or video data) therebetween. At this time, if the software is compressed or encrypted, the remote host 2 performs a process of decompression or composition prior to step S205, i.e., before the execution of the remote application.

As described above, the local host is able to acquire address information of a remote host from the service administration host, even if the address information of the remote host is previously unknown. In addition, if it becomes necessary to exchange information between the local host and the remote host, they are able to download necessary soft ware from the service administration host. This enables memory areas thereof to be used efficiently. In addition, the remote host downloads software after a process of authenticating a user key has been performed. This makes it possible to prevent the local host from performing an unauthorized process, thereby making it possible to construct a system which provides safe service.

Note that the local host 1 and the remote host 2 may each erase the downloaded software (SW) as necessary, once the process has been completed.

Note that the local host 1 and the remote host 2 may each store the downloaded software (SW) in the storage device a4 as necessary, once the process has been completed.

Note that although, in the first embodiment, the information as to any remote host 2 which is capable of communicating with the local host 1 is assumed to be stored in the service administration host 4, it may be stored in the local host 1 itself. In this case, the local host 1 selects a remote host that is capable of executing software necessary for a remote service that is desired to be shared, based on the stored information, and then instructs the remote host to download the software from the service administration host 4. In response thereto, the remote host downloads the necessary software, as instructed, from the service administration host 4. Then, the remote host and the local host execute the software in association with each other, thereby performing the exchanging of data, etc.

Note that although it is assumed in the first embodiment that the local host 1 is not provided with software necessary for exchanging information with the remote host 2, the local host 1 may be previously provided with the software. In this case, the operation of step S101 shown in FIG. 4 is omitted.

Note that although the first embodiment has been described with respect to the case where the local host 1 forwards information such as a still or video image to the remote host 2, the present invention is not restricted to this. Conversely, the remote host 2 may cause the local host 1 to download the necessary software from the service administration host 4, and may forward information such as a still or video image to the local host 1. Although the reversed operation is required, this process can be easily carried out according to the above description.

Note that although it is assumed in the first embodiment that the remote host 2 downloads software based on its own judgment, it may be so arranged that the service administration host 4 transmits the software to the remote host 2 forcibly. In this case, the local host 1 instructs the service administration host 4 to transmit the necessary software to the remote host 2 in the operation of step S105 . At the same time, the local host 1 transmits a user key to the service administration host 4. In response thereto, the service administration host 4 checks the user key in association with the certificate authority host 3, and if the user key is correct, it transmits the necessary software to the remote host 2. Thus, the remote host 2 is able to acquire the necessary software.

Note that although in the first embodiment the remote host 2 causes the certificate authority host 3 to authenticate the local host in order to prevent unauthorized access to the remote host 2, the method for preventing the unauthorized access is not restricted to this. Even if the certificate authority host 3 is not present, it is possible to prevent the unauthorized access. For example, in the case where the local host 1 requests the remote host 2 to download software, the remote host 2 may request the local host 1 to transmit a password. Then, if the password is correct, the remote host 2 may accept the request to download the software. If the password is incorrect, the remote host 2 may reject the request to download the software. Alternatively, it may be so arranged that a password(s) for identifying the local host 1 and the remote host 2 is set in the service administration host 4 so as to be associated with the user key. The remote host 2 may request the service administration host 4 to determine whether the user key agrees with the password (s). The above arrangement eliminates the need of the certificate authority host 3, and makes it possible for the remote host 2 to independently check the validity of a request from the local host 1, thereby controlling information exchanged on the network.

### (second embodiment)

Since a structure of the entire system according to a second embodiment is similar to that of the first embodiment, FIG. 1 is used here. A remote host 2 according to the second embodiment stores once-downloaded software in the storage device a4 thereof.

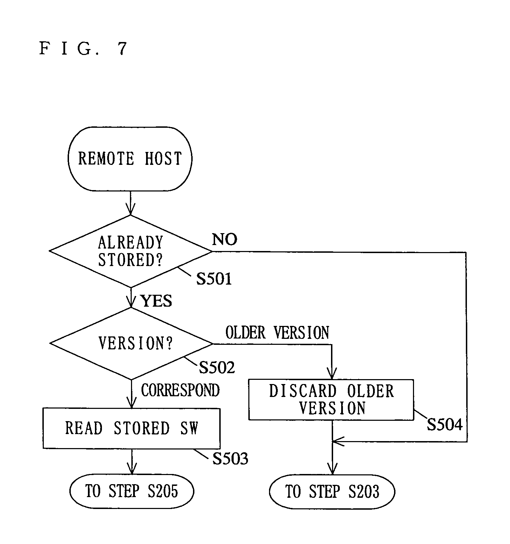

FIG. 7 is a flowchart showing an operation of the remote host according to the second embodiment of the present invention. The operation as shown in FIG. 7 is performed after step S202 shown in FIG. 4 during the operation of the remote host according to the first embodiment. Referring to FIG. 7, the operation of the remote host according to the second embodiment is described below.

Firstly, at step S105, the local host 1 transmits a version number together with an instruction to download the software. The version number of the software is included in the additional information returned by the service administration host 4 at step S403. The remote host 2 determines whether the software which it is instructed by the local host 1 to download is stored in the storage device a4 (step S501). If it is not stored, the remote host 2 proceeds to the operation of step S203 shown in FIG. 4, and requests the service administration host 4 to transmit the software.

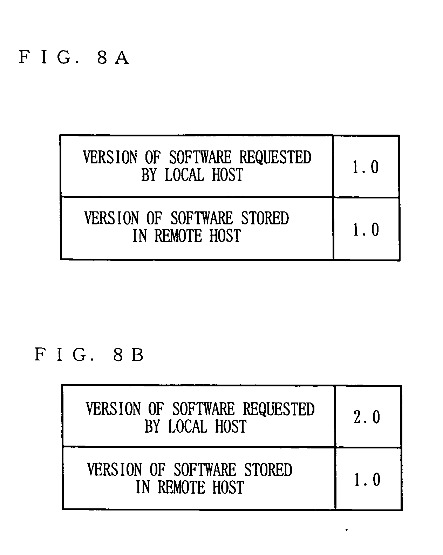

On the other hand, if it is stored, the remote host 2 determines whether the version of the stored software corresponds with the version of the requested software (step S502). This comparison of versions is conducted by comparing the version number of the software which is transmitted from the local host 1 together with the download instruction with the version number of the software stored in the remote host 2 . FIG. 8A is a diagram showing an instance where the versions correspond with each other. FIG. 8B is a diagram showing an instance where the versions do not correspond with each other.

Note that even in the case where the version numbers do not completely correspond with each other, if a predetermined requirement is fulfilled (e.g., the version number of the software stored by the remote host 2 is newer than the version number of the software requested by the local host 1, etc.), the remote host 2 may consider the versions as corresponding with each other. Because the local host 1 has downloaded the necessary software from the service administration host 4 (see step S101 in FIG. 4), the local host 1 has obtained the latest software. Consequently, it may be that the version of the software obtained by the local host 1 and the version of the software stored in the remote host 2 do not correspond with each other. Therefore, the remote host 2 performs version check by an operation of step S502.

If it is determined at step S502 that the versions correspond with each other, the remote host 2 reads the software stored in the storage device a4 (step S503), proceeds to the operation of step S205 shown in FIG. 4, and executes the software in association with the local host 1. On the other hand, if it is determined that the versions do not correspond with each other, i . e. , an older version of the software is stored, the remote host 2 discards the older version of software (step S504) and proceeds to the operation of step S203 shown in FIG. 4 to download the latest version of software from the service administration host 4.

As described above, in the second embodiment, the remote host keeps the once-downloaded software stored therein. If software that is to be executed has not been stored therein, the remote host downloads the latest version of software. Accordingly, software is not necessarily downloaded, resulting in a reduction of communication time spent in downloading.

Note that it is assumed in the second embodiment that in the case where the remote host downloads software from the service administration host, version check is conducted. The remote host may also perform version check in the case where the service administration host transmits the software to the remote host in response to an instruction from the local host. Specifically, before transmitting the software forcibly, the service administration host reports, to the remote host, the version of the software intended to be transmitted. The remote host recognizes the reported version and determines whether software of that version is stored. If no software of that version is stored, or if an older version of the stored is stored, the remote host reports, to the service administration host, a permission to transmit the software. On the other hand, if the latest version of the software is stored, the remote host reports to the service administration host that the transmission of the software be cancelled. The service administration host does or does not transmit the software depending on the report from the remote host.

### (third embodiment)

Since a structure of the entire system according to a third embodiment is similar to that of the first embodiment, FIG. 1 is used here. The local host 1 according to the third embodiment keeps once-downloaded software in the storage device a4 thereof. In addition, it is assumed in the third embodiment that, as described in the second embodiment, the remote host operates to store once-downloaded software in the storage device a4 thereof, and to download the latest version of software.

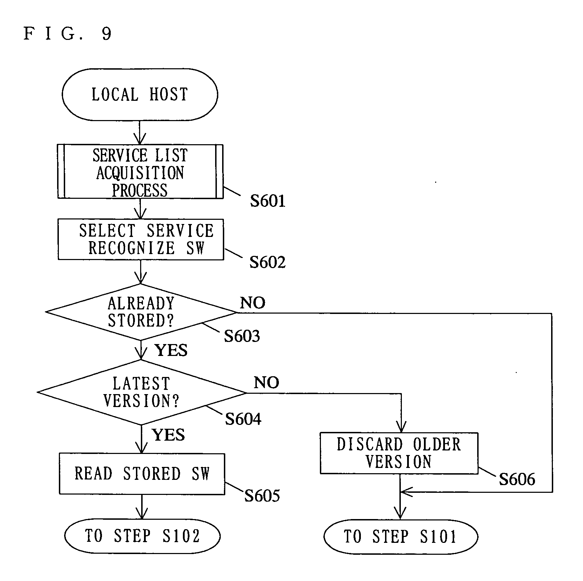

FIG. 9 is a flowchart showing an operation of a local host according to the third embodiment of the present invention. The operation as shown in FIG. 9 is performed before step S101 shown in FIG. 4, during the operation of the local host according to the first embodiment. Referring to FIG. 9, the operation of the local host according to the third embodiment is described below.

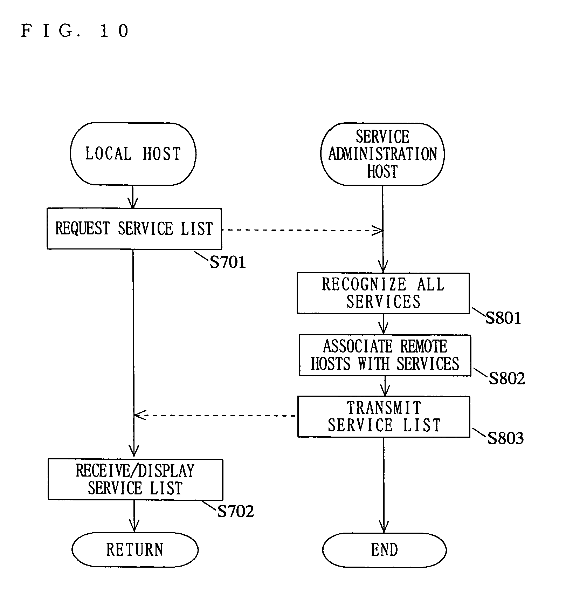

First, the local host 1 acquires, from the service administration host 4, a list of available services (hereinafter referred to as a "service list") (step S601) . A process performed at step S601 is described later (see FIG. 10). In the service list, each service is associated with a remote host (s) necessary for carrying out the service. This remote host(s) refers to a remote host(s) capable of accessing the local host 1 which has requested the service list.

Next, the local host 1 allows the user to select a service that he or she desires to use, and recognizes software necessary for the service (step S602).

Next, the local host 1 determines whether the recognized software is already stored in the storage device a4 (step S603) . If it is not stored yet, the local host 1 proceeds to the operation of step S101 in FIG. 4, and downloads the desired software from the service administration host 4.

On the other hand, if it is already stored, the local host 1 determines whether the stored software is the latest version or not by inquiring of the service administration host 4 whether it is the latest version (step S604). If it is not the latest version, the local host 1 discards this older version of the software (step S606), and proceeds to the operation of step S101 in FIG. 4, to download the latest version of the software from the service administration host 4. On the other hand, if it is the latest version, the local host 1 reads the software stored in the storage device a4 (step S605), and proceeds to the operation of step S102 in FIG. 4.

FIG. 10 is a flowchart showing operations of the local host and the service administration host during the service list acquisition process (step S601) . With reference to FIG. 10, the operations of the local host 1 and the service administration host 4 during the service list acquisition process (step S601) are described below.

First, the local host 1 requests the service administration host 4 to transmit the service list (step S701).

In response thereto, the service administration host 4 recognizes all services that are registered therein (step S801). Next, with respect to each service, the service administration host 4 checks a remote host(s) that is capable of carrying out the service and of accessing the local host 1, and associates the remote host(s) with the service (step S802). Next, the service administration host 4 transmits, as the service list, a list in which the services are each associated with the remote host(s) (step S803), and terminates the process.

The local host 1 receives the service list which is transmitted from the service administration host 4, displays it on the display section a5 (step S702), and returns to the operation shown in FIG. 9.

Thus, the user is able to recognize an accessible remote host and recognize a service which can be carried out by the remote host.

Note that, at step S602 in the third embodiment, in addition to allowing the user to select a service, the local host 1 may also allow the user to select a remote host after acquiring the user key. In this case, the operations of steps S102 to S104 can be omitted.

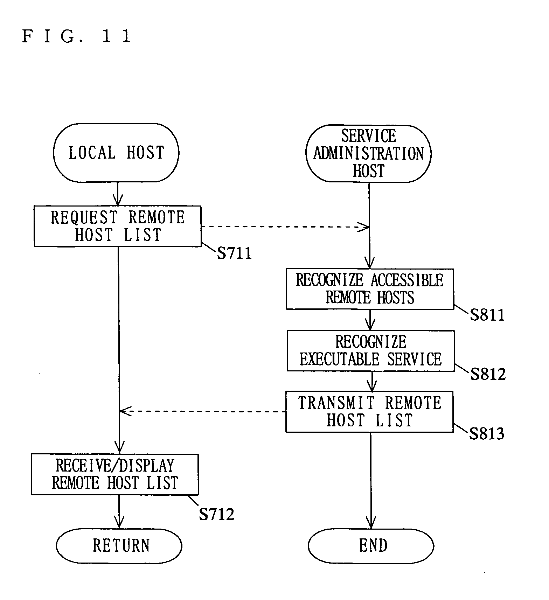

Note that although it has been assumed in the third embodiment that the local host 1 acquires the service list, it may be so arranged that the local host 1 acquires a list of accessible remote hosts (hereinafter referred to as a "remote host list"). FIG. 11 is a flowchart showing operations of the local host and the service administration host when the list of accessible remote hosts is acquired.

As shown in FIG. 11, the local host 1 first requests the service administration host 4 to transmit the remote host list (step S711). In response thereto, the service administration host 4 refers to a list which has previously been set (see FIG. 2) to recognize remote hosts that are capable of accessing the local host (step S811); recognizes a service that can be carried out by each remote host (step S812) ; transmits, to the local host 1, the remote host list in which the remote hosts are each associated with the service (step S813); and terminates the process. The local host 1 receives and displays the remote host list (step S712), and returns to the operation shown in FIG. 9.

Thus, the user is able to recognize any accessible remote host and to recognize a service can be carried out by the remote host.

Note that it has been assumed in the examples shown in FIG. 10 and FIG. 11 that the local host 1 acquires a service list or a remote host list directly from the service administration host 4. However, it may be so arranged that the local host 1 requests the certificate authority host 3 to acquire the service list or the remote host list and the certificate authority host 3 acquires the service list or the remote host list from the service administration host 4 and transmits it to the local host 1. Also, it may be so arranged that the certificate authority host 3 creates the service list or the remote host list, and transmits it to the local host 1. The function of the certificate authority host of this case may be performed by another computer device (a host for list relaying), such as the local host, a remote host, a home server, or the like.

### (fourth embodiment)

In the first embodiment, even if a remote host which can be selected by the local host is present, it is impossible to carry out, for example, a process of transmitting information possessed by the local host to the remote host, unless power of the remote host is on.

In such a case, a local host according to a fourth embodiment causes the service administration host (or another remote host which the local host is permitted to access) to temporarily carry out a required process. For example, in the case where the local host is to forward image data to the remote host, the local host temporarily forwards the image data to the service administration host.

If it is recognized that the power of the remote host selected by the local host has been turned on, the information which the service administration host acting as a proxy has obtained is forwarded further to the remote host.

As described above, in the fourth embodiment, even if the power of the remote host selected by the local host is off, the service administration host is able to act as a proxy to perform a necessary process and thereafter forward information to the remote host. Therefore, it is possible to provide a system which is capable of fulfilling a request of the local host even when a desired remote host is turned off.

Note that in the case where the service administration host or a different remote host is unable to complete a process but able to finish a part of the process, the local host may cause the service administration host or the different remote host to execute that part of the process, and may forward a resultant from the execution after the power of the selected remote host is turned on. Thus, the load on the selected remote host can be reduced, and even when the remote host selected by the local host is turned off, it is possible to satisfy a request of the local host to some extent, although it takes more time.

Note that, instead of the service administration host, the certificate authority host as a home server may perform a proxy process as described above.

### (fifth embodiment)

The first embodiment cannot cope with cases where a process which would satisfy a request of the local host cannot be performed by only a single remote host. In some of such cases, however, the request will be satisfied by employing two or more remote hosts. For example, in the case where a function of converting format (e.g., data format, compression, etc.) of information or a function of converting resolution is possessed by one remote host whereas a function of storing information is possessed by another remote host, it is impossible for a single remote host to perform a process of converting the format or resolution of the information and thereafter storing the information. However, that process can be performed by the two remote hosts operating in collaboration.

A local host according to a fifth embodiment first transmits information to a remote host having a function of converting a format of information (or a function of converting resolution of information) to cause the remote host to perform conversion, and then transmits the information after conversion to another remote host having a function of storing information to cause that remote host to store the information.

Conversely, a remote host may transmit information to another remote host having a function of converting format of information (or a function of converting resolution of information) to cause that remote host to perform conversion, and thereafter may transmit the information after conversion to the local host to cause the local host to store the information.

As described above, in the fifth embodiment, in the case where a format conversion or a resolution conversion is required to be performed, for example, it is possible to cause a remote host capable of performing such a process to perform the process, and thereafter exchange information with another remote host. Thus, the following troubles can be prevented from occurring: a process cannot be performed because of incompatibility in formats of information; the exchanging of information cannot be performed because of difference in resolution; and so on.

Specifically, the fifth embodiment is applicable to a case as described below. In a digital television, MPEG2 is used as a format of video. Meanwhile, in a mobile phone, MPEG4 is used as a format of video. In this situation, reproduction cannot be successfully performed if video data stored in the mobile phone is forwarded to the digital television or if video data stored in the digital television is forwarded to the mobile phone. In this case, the mobile phone may cause a remote host having a function of converting format to perform format conversion, and thereafter may forward the data to the digital television. The converse is also true.

### (sixth embodiment)

It has been assumed in the first embodiment that the local host acquires, from the service administration host, information of the remote host. However, in the case where the local host and the remote host belong to the same network, the local host is capable of acquiring the information of the remote host without the use of the service administration host. Therefore, the structure of the service administration host can be made simpler.

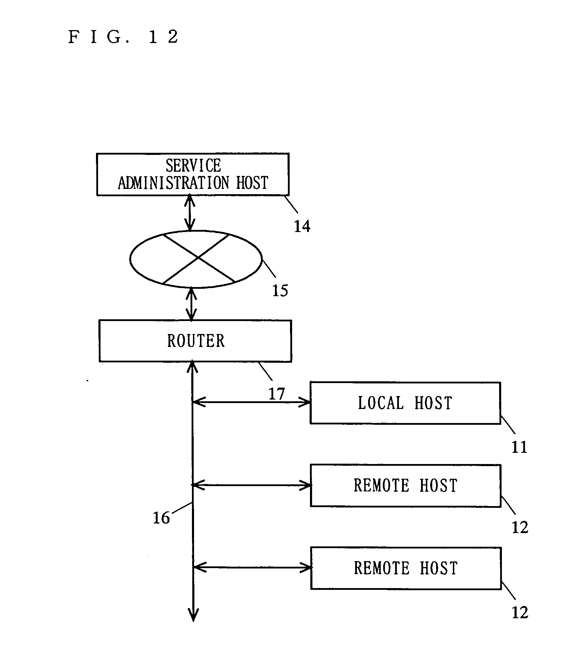

FIG. 12 is a diagram showing the entire structure of a service software acquisition system according to a sixth embodiment of the present invention. In FIG. 1, the service software acquisition system includes a local host 11, two remote hosts 12, and a service administration host 14. Note that although the local host 1 and the service administration host 4 are each described herein as being single in number, they can be multiple in number. In addition, the number of remote hosts 2 may be less than or greater than two.

In FIG. 12, the local host 11 and the remote hosts 12 are electronic devices such as digital televisions and set-top boxes, which are installed in houses. The local host 11 and the remote hosts 12 are connected to one another via a local network 16. The local network 16 may be either a wire network or a wireless network. Atypical communications protocol for the local network 16 is TCP/IP. The TCP/IP is a known technique which provides a protocol for exchanging information between a plurality of devices, and a detailed description thereof is omitted. The local network 16 is connected to the Internet 15 outside a house via a router 17. The router 17 is a gateway for connecting the local network 16 inside the house to the Internet 15. As specific examples of the router 17, known devices such as an ADSL modem, a broadband router, a home server can be pointed out.

In such a network, the local host 11 is capable of discovering a remote host 12 by utilizing broadcast communication (which is also referred to as "multicast communication"). The term "broadcast" refers to a process of transmitting the same message to all electronic devices that are connected to the local network 16. A typical known technique for discovering a remote host by utilizing the broadcast communication is SSDP (Simple Service Dicover Protocol).

An operation of the SSDP is simply described here. The local host 11 broadcasts a request called "SSDP Search" (hereinafter referred to as an "SSDP search request") to all devices connected to the local network 16. In response thereto, the remote hosts 12 return, to the local host 11, their own IP addresses and/or information as to available services. Thus, the local host 11 is able to acquire information as to the remote hosts 12.

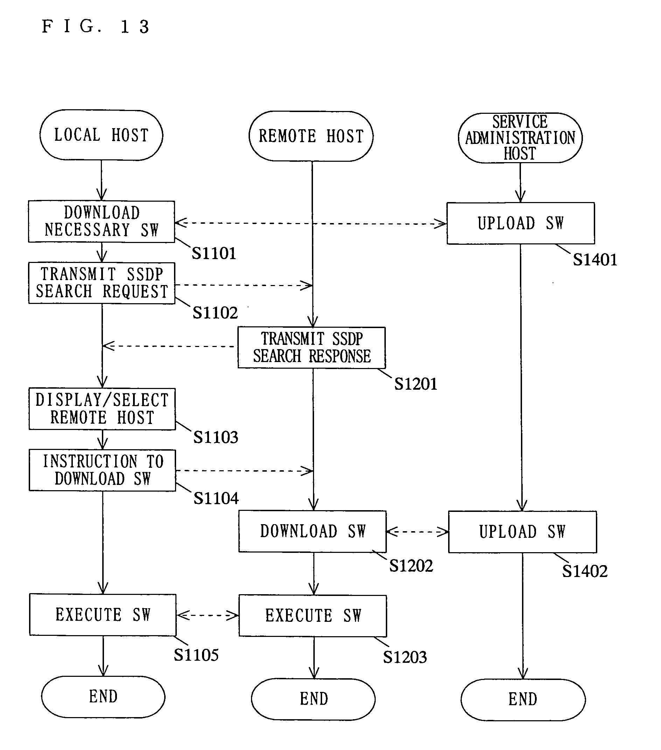

FIG. 13 is a flowchart for explaining an operation of the entire system according to the sixth embodiment of the present invention. With reference to FIG. 13, the operation of the entire system and an operation of each host are described below.

First, the local host 11 determines whether it possesses software necessary for a remote service for exchanging information with a remote host 12, and if necessary, the local host 11 downloads the software from the service administration host 14 (steps S1101 and S1401).

Next, the local host 11 broadcasts SSDP search requests in order to find whether a remote host which is capable of carrying out the desired service exists or not (step S1102). In response thereto, each remote host 12 returns a message (hereinafter referred to as an "SSDP search response") including its own IP address, specifications, a process function, and so on (step S1201).

Next, based on the information included in the received SSDP search responses, the local host 11 displays remote hosts having hardware (HW) that is capable of executing the desired process, and allows the user to select a remote host (step S1103) . At this time, if a plurality of such remote hosts exist, the local host 11 displays the plurality thereof. Note that it may be so arranged that if a remote host that satisfies a predetermined criterion exists, the local host 11 selects that remote host automatically.

Next, the local host 11 instructs the selected remote host to download necessary software (step S1104) . In response thereto, the remote host 12 downloads the necessary software from the service administration host 4 (steps S1202 and S1402) . Once the download of the necessary software has been completed on the remote host side, the environment for exchanging information between the local host 11 and the remote host 12 is established, so that the local host 1 and the remote host 12 perform a necessary process in association with each other (steps S1105 and S1203) and perform the exchanging of the information (still or video image data).

This structure enables the local host 11 to acquire information as to remote hosts by using the broadcast communication. Therefore, the service administration host 14 need not hold the information as to the remote hosts.

Note that although it has been assumed in the sixth embodiment that the SSDP is used as a means for the local host 11 to discover remote hosts, the present invention is not restricted to this. As techniques that produce similar effects, there are known techniques such as Rendezbous. As in these techniques, it may be so arranged that the broadcast communication is used for the local host to search for remote hosts.

Note that it has been assumed in the sixth embodiment that the network to which the broadcast communication is applied is a local network. In the case of a wide area network, it may be so arranged that the local host searches for remote hosts capable of executing the desired process by applying the broadcast communication to a plurality of remote hosts that belong to a predetermined group.

It goes without saying that variations of the first to fifth embodiments can also be applied to the sixth embodiment.

### INDUSTRIAL APPLICABILITY

The present invention provides service software acquiring method and system, and an electronic communication device used therefor, which are useful for, for example, a system in which software which is regularly unused and unnecessary can be acquired as necessary and in which a service is executed by a plurality of electronic communication devices connected to one another via a network operating in association with one another.

## Claims

1. A service software acquiring method for acquiring software necessary for a remote service that is desired to be shared between a local host and a remote host which are connected via a network, from a service administration host that has the software stored therein, the method comprising:
a step in which the local host requests the service administration host to start a desired remote service;
a step in which, in response to the request to start the remote service, the service administration host chooses remote hosts that are capable of sharing the remote service with the local host, and returns to the local host information as to the remote hosts;
a step in which, based on the returned information as to the remote hosts, the local host selects a remote host with which the local host desires to share the remote service, and instructs the remote host to download from the service administration host the software for sharing the remote service; and
a step in which the remote host downloads from the service administration host the necessary software which the remote host has been instructed to download.

2. A service software acquiring method for acquiring software necessary for a remote service that is desired to be shared between a local host and a remote host which are connected via a network, from a service administration host that has the software stored therein, the method comprising:
a step in which the local host selects a remote host that is capable of executing the software necessary for the remote service that is desired to be shared;
a step of instructing the selected remote host to download the software from the service administration host; and
a step in which the remote host downloads from the service administration host the necessary software which the remote host has been instructed to download.

3. The service software acquiring method according to claim 1 or 2, further comprising:
a step in which the local host requests from the service administration host a list of remote services that are usable to the local host;
a step in which, in response to the request from the local host, the service administration host recognizes each of the remote services that are usable to the local host;
a step in which the service administration host recognizes a remote host that is capable of sharing the recognized remote service with the local host;
a step in which the service administration host reports to the local host a service list that shows a combination of the remote service and the remote host; and
a step in which the local host displays the reported service list.

4. The service software acquiring method according to claim 1 or 2, further comprising:
a step in which the local host requests from the service administration host a list of remote hosts that are accessible by the local host;
a step in which, in response to the request from the local host, the service administration host recognizes the remote hosts that are accessible by the local host;
a step in which the service administration host recognizes, with respect to each of the recognized remote hosts, a remote service that is shareable with the local host;
a step in which the service administration host reports to the local host a remote host list that shows a combination of the remote host and the remote service; and
a step in which the local host displays the reported remote host list.

5. The service software acquiring method according to claim 1 or 2, further comprising:
a step in which the local host requests, from a list relaying host which is connected to the network, a list of remote services that are usable to the local host;
a step in which, in response to the request from the local host, the list relaying host requests from the service administration host the list of remote services that are usable to the local host;
a step in which, in response to the request from the list relaying host, the service administration host recognizes each of the remote services that are usable to the local host;
a step in which the service administration host recognizes a remote host that is capable of sharing the recognized remote service with the local host;
a step in which the service administration host reports to the local host a service list that shows a combination of the remote service and the remote host; and
a step in which the local host displays the reported service list.

6. The service software acquiring method according to claim 1 or 2, further comprising:
a step in which the local host requests, from a list relaying host which is connected to the network, a list of remote hosts that are accessible by the local host;
a step in which, in response to the request from the local host, the list relaying host requests from the service administration host the list of remote hosts that are usable to the local host;
a step in which, in response to the request from the list relaying host, the service administration host recognizes the remote hosts that are accessible by the local host;
a step in which the service administration host recognizes, with respect to each of the recognized remote hosts, a remote service that is shareable with the local host;
a step in which the service administration host reports to the local host a remote host list that shows a combination of the remote host and the remote service; and
a step in which the local host displays the reported remote host list.

7. The service software acquiring method according to claim 1 or 2, wherein
the remote host keeps the acquired software stored therein, and
in the step in which the remote host downloads from the service administration host:
if an instruction to download the necessary software is given from the local host, the remote host determines whether software identical to the necessary software is included in the stored software;
if no identical software is included, the remote host downloads the necessary software from the service administration host; and
if any identical software is included, without downloading the necessary software from the service administration host, the local host and the remote host carry out the remote service by employing the stored software.

8. The service software acquiring method according to claim 7, wherein
in the step in which the remote host downloads from the service administration host, further:
if the identical software is included, a version of the necessary software and a version of the stored software are compared; and
if the version of the stored software is older, the stored software is discarded, and the necessary software is downloaded from the service administration host.

9. The service software acquiring method according to claim 1 or 2, further comprising a step in which the local host downloads from the service administration host the software necessary for sharing the remote service.

10. The service software acquiring method according to claim 9, wherein
the local host keeps the acquired software stored therein, and
in the step in which the local host downloads from the service administration host:
the local host determines whether software identical to the necessary software is included in the stored software;
if no identical software is included, the local host downloads the necessary software from the service administration host; and
if any identical software is included, without downloading the necessary software from the service administration host, the local host and the remote host carry out the remote service by employing the stored software.

11. The service software acquiring method according to claim 10, wherein in the step in which the local host downloads from the service administration host, further:
if the identical software is included, a version of the necessary software and a version of the stored software are compared; and
if the version of the stored software is older, the stored software is discarded, and the necessary software is downloaded from the service administration host.

12. The service software acquiring method according to claim 1 or 2, wherein the information as to the remote hosts is addresses of the remote hosts that are assigned on the network.

13. The service software acquiring method according to claim 1 or 2, further comprising a step in which, if a plurality of remote hosts that are capable of sharing the remote service are present, the local host displays a remote host that is accessible.

14. The service software acquiring method according to claim 1 or 2, further comprising a step of communicating information between the remote host and the local host by utilizing the software downloaded by the remote host.

15. The service software acquiring method according to claim 14, wherein in the step of communicating information, still image data possessed by the local host or the remote host is communicated.

16. The service software acquiring method according to claim 14, wherein in the step of communicating information, video image data possessed by the local host or the remote host is communicated.

17. The service software acquiring method according to claim 14, wherein in a case where information is communicated between the local host and the selected remote host, the method further comprises:
a step in which the local host or the selected remote host transmits the information to a remote host different from the selected remote host, the different remote host being capable of performing a predetermined process on the information that is communicated; and
a step in which, after performing the predetermined process, the different remote host transmits the processed information to the selected remote host or the local host.

18. The service software acquiring method according to claim 17, wherein the predetermined process is a process of converting a format of the information.

19. The service software acquiring method according to claim 17, wherein the predetermined process is a process of converting a resolution of the information to a predetermined resolution.

20. A service software acquiring system for executing a desired process between at least two or more electronic communication devices that are connected via a network, the system comprising:
a service administration host that is connected to the network and has stored therein software necessary for executing the desired process;
among the at least two or more electronic communication devices, a first electronic communication device operated by a user, and
a second electronic communication device that is capable of executing the desired process by operating in association with the first electronic communication device; and
association recognition means for recognizing an association between the first electronic communication device and the second electronic communication device,
wherein the first electronic communication device includes software acquisition means for, when executing the desired process, allowing the second electronic communication device recognized by the association recognition means to acquire the software stored in the service administration host.

21. The service software acquiring system according to claim 20, wherein the software acquisition means instructs the second electronic communication device selected by the user to download the software from the service administration host.

22. The service software acquiring system according to claim 20, wherein the software acquisition means instructs the service administration host to transmit the software to the second electronic communication device selected by the user.

23. The service software acquiring system according to claim 20, wherein when recognizing the association, the association recognition means recognizes the second electronic communication device that is capable of operating in association with the first electronic communication device by authenticating the user operating the first electronic communication device.

24. The service software acquiring system according to claim 20, wherein the association recognition means is provided within a home server for a user who possesses the first electronic communication device.

25. The service software acquiring system according to claim 20, wherein the association recognition means is provided within the service administration host.

26. An electronic communication terminal that is connected to a network and which executes a predetermined process by operating in association with a remote host connected to the network, the terminal comprising:
information acquisitionmeans for acquiring, from a computer device connected to the network, information as to remote hosts that are capable of executing the predetermined process in association;
remote host specification means for, based on the information acquired by the information acquisition means, specifying a remote host that is capable of executing the predetermined process in association; and
software acquisition request means for causing the remote host specified by the remote host specification means to acquire software for executing the predetermined process, the software being stored in a service administration host connected to the network.

27. The electronic communication terminal according to claim 26, further comprising user key acquisition means for acquiring a user key that is registered in a certificate authority host connected to the network, wherein
the software acquisition request means transmits the user key acquired by the user key acquisition means together with a request to acquire the software for executing the predetermined process.

28. An electronic communication terminal that is connected to a network and which executes a predetermined process by operating in association with a local host connected to the network, the terminal comprising:
software acquisition request reception means for accepting, from the local host, a request to acquire software for executing the predetermined process; and
software acquisition means for downloading, from a service administration host connected to the network, the software for executing the predetermined process.

29. The electronic communication terminal according to claim 28, further comprising user key check means for requesting a certificate authority host connected to the network to check a user key, wherein
in a case where the user key accompanies the request to acquire the software received by the software acquisition request reception means, if the user key check means checks the user key, the software acquisition means downloads, from the service administration host, the software for executing the predetermined process.

## Amended claims

### Amended claims under Art. 19.1 PCT

[Received by the International Bureau on April 13, 2004 (13. 04. 04); originally-filed claims 2-29 are amended; new claims 30-36 are added; no changes are made in the other claim. (17 pages) (English translation: 19 pages)]

A service software acquiring method for acquiring software necessary for a remote service that is desired to be shared between a local host and a remote host which are connected via a network, from a service administration host that has the software stored therein, the method comprising:
a step in which the local host requests the service administration host to start a desired remote service;
a step in which, in response to the request to start the remote service, the service administration host chooses remote hosts that are capable of sharing the remote service with the local host, and returns to the local host information as to the remote hosts;
a step in which, based on the returned information as to the remote hosts, the local host selects a remote host with which the local host desires to share the remote service, and instructs the remote host to download from the service administration host the software for sharing the remote service; and
a step in which the remote host downloads from the service administration host the necessary software which the remote host has been instructed to download.

(Amended) A service software acquiring method for acquiring software necessary for a remote service that is desired to be shared between a local host and a remote host which are connected via a network, from a service administration host that has the software stored therein, the method comprising:
a step in which the local host requests the service administration host to start a desired remote service;
a step in which, in response to the request to start the remote service, the service administration host chooses remote hosts that are capable of sharing the remote service with the local host, and returns to the local host information as to the remote hosts;
a step in which, based on the returned information as to the remote hosts, the local host selects a remote host with which the local host desires to share the remote service, and instructs the service administration host to transmit to the remote host the software for sharing the remote service; and
a step in which, in response to the instruction to transmit the software, the service administration host transmits the necessary software to the remote host.

(Amended) A service software acquiring method for acquiring software necessary for a remote service that is desired to be shared between a local host and a remote host which are connected via a network, from a service administration host that has the software stored therein,
wherein the network has a certificate authority host for authenticating the local host connected thereto,
the method comprising:
a step in which the local host acquires a registered user key from the certificate authority host;
a step in which the local host transmits to the service administration host a request to start a desired remote service together with the user key;
a step in which, in response to the request to start the remote service, the service administration host chooses, fromamong remote hosts which are accessible based on the user key, remote hosts that are capable of sharing the remote service with the local host, and returns to the local host information as to the remote hosts;
a step in which, based on the returned information as to the remote hosts, the local host selects a remote host with which the local host desires to share the remote service, and transmits to the remote host an instruction to download from the service administration host the software for sharing the remote service together with the user key; and
a step in which, if a check of the user key is certified in association with the certificate authority host, the remote host downloads from the service administration host the necessary software which the remote host has been instructed to download.

(Amended) A service software acquiring method for acquiring software necessary for a remote service that is desired to be shared between a local host and a remote host which are connected via a network, from a service administration host that has the software stored therein,
wherein the network has a certificate authority host for authenticating the local host connected thereto,
the method comprising:
a step in which the local host acquires a registered user key from the certificate authority host;
a step in which the local host transmits to the service administration host a request to start a desired remote service together with the user key;
a step in which, in response to the request to start the remote service, the service administration hostchooses, from among remote hosts which are accessible based on the user key, remote hosts that are capable of sharing the remote service with the local host, and returns to the local host information as to the remote hosts;
a step in which, based on the returned information as to the remote hosts, the local host selects a remote host with which the local host desires to share the remote service, and transmits to the service administration host an instruction to transmit to the remote host the software for sharing the remote service together with the user key; and
a step in which, in response to the instruction to transmit the software, the service administration host transmits the necessary software to the remote host after a check of the user key is certified in association with the certificate authority host.

(Amended) The service software acquiring method according to any of claims 1-4, wherein the information as to the remote hosts is addresses of the remote hosts that are assigned on the network.

(Amended) The service software acquiring method according to any of claims 1-4, further comprising a step in which the local host downloads from the service administration host the software necessary for sharing the remote service.

(Amended) The service software acquiring method according to any of claims 1-4, further comprising a step in which, if a plurality of remote hosts that are capable of sharing the remote service are present, the local host displays a remote host that is accessible.

(Amended) The service software acquiring method according to any of claims 1-4, further comprising a step of communicating information between the remote host and the local host by utilizing the software downloaded by the remote host.

(Amended) The service software acquiring method according to claim 8, wherein in the step of communicating information, still image data possessed by the local host or the remote host is communicated.

(Amended) The service software acquiring method according to claim 8, wherein in the step of communicating information, video image data possessed by the local host or the remote host is communicated.

(Amended) The service software acquiring method according to claim 8, wherein in a case where information is communicated between the local host and the selected remote host, the method further comprises:
a step in which the local host or the selected remote host transmits the information to a remote host different from the selected remote host, the different remote host being capable of performing a predetermined process on the information that is communicated; and
a step in which, after performing the predetermined process, the different remote host transmits the processed information to the selected remote host or the local host.

(Amended) The service software acquiring method according to claim 11, wherein the predetermined process is a process of converting a format of the information.

(Amended) The service software acquiring method according to claim 11, wherein the predetermined process is a process of converting a resolution of the information to a predetermined resolution.

(Amended) A service software acquiring method for acquiring software necessary for a remote service that is desired to be shared between a local host and a remote host which are connected via a network, from a service administration host that has the software stored therein, the method comprising:
a step in which the local host selects a remote host that is capable of executing the software necessary for the remote service that is desired to be shared;
a step of instructing the selected remote host to download the software from the service administration host; and
a step in which the remote host downloads from the service administration host the necessary software which the remote host has been instructed to download.

(Amended) The service software acquiring method according to claim 14, further comprising a step of communicating information between the remote host and the local host by utilizing the software downloaded by the remote host.

(Amended) The service software acquiring method according to claim 14, further comprising a step in which the local host downloads from the service administration host the software necessary for sharing the remote service.

(Amended) The service software acquiring method according to any of claims 1, 3, and 14, wherein
the remote host keeps the acquired software stored therein, and
in the step in which the remote host downloads from the service administration host:
if an instruction to download the necessary software is given from the local host, the remote host determines whether software identical to the necessary software is included in the stored software;
if no identical software is included, the remote host downloads the necessary software from the service administration host; and
if any identical software is included, without downloading the necessary software from the service administration host, the local host and the remote host carry out the remote service by employing the stored software.

(Amended) The service software acquiring method according to claim 17, wherein
in the step in which the remote host downloads from the service administration host, further:
if the identical software is included, a version of the necessary software and a version of the stored software are compared; and
if the version of the stored software is older, the stored software is discarded, and the necessary software is downloaded from the service administration host.

(Amended) The service software acquiring method according to claim 2 or 4, wherein,
the remote host keeps the acquired software stored therein, and
in the step in which the service administration host transmits the necessary software to the remote host:
the service administration host inquires of the remote host whether the necessary software is stored;
in response to the inquiry from the service administration host, the remote host determines whether software identical to the necessary software is stored, and the remote host reports a result of the determination to the service administration host; and
in response to the report from the remote host, if the identical software is not stored, the service administration host transmits the necessary software to the remote host.

(Amended) The service software acquiring method according to claim 19, wherein, when the remote host determines whether the software identical to the necessary software is stored, the remote host reports to the service administration host that the identical software is not stored if an older version of the software is stored.

(Amended) The service software acquiring method according to claim 6 or 16, wherein
the local host keeps the acquired software stored therein, and
in the step in which the local host downloads from the service administration host:
the local host determines whether software identical to the necessary software is included in the stored software;
if no identical software is included, the local host downloads the necessary software from the service administration host; and
if any identical software is included, without downloading the necessary software from the service administration host, the local host and the remote host carry out the remote service by employing the stored software.

(Amended) The service software acquiring method according to claim 21, wherein in the step in which the local host downloads from the service administration host, further:
if the identical software is included, a version of the necessary software and a version of the stored software are compared; and
if the version of the stored software is older, the stored software is discarded, and the necessary software is downloaded from the service administration host.

(Amended) The service software acquiring method according to any of claims 1-4 and 14, further comprising:
a step in which the local host requests from the service administration host a list of remote services that are usable to the local host;
a step in which, in response to the request from the local host, the service administration host recognizes each of the remote services that are usable to the local host;
a step in which the service administration host recognizes a remote host that is capable of sharing the recognized remote service with the local host;
a step in which the service administration host reports to the local host a service list that shows a combination of the remote service and the remote host; and
a step in which the local host displays the reported service list.

(Amended) The service software acquiring method according to any of claims 1-4 and 14, further comprising:
a step in which the local host requests from the service administration host a list of remote hosts that are accessible by the local host;
a step in which, in response to the request from the local host, the service administration host recognizes the remote hosts that are accessible by the local host;
a step in which the service administration host recognizes, with respect to each of the recognized remote hosts, a remote service that is shareable with the local host;
a step in which the service administration host reports to the local host a remote host list that shows a combination of the remote host and the remote service; and
a step in which the local host displays the reported remote host list.

(Amended) The service software acquiring method according to any of claims 1-4 and 14, further comprising:
a step in which the local host requests, from a list relaying host which is connected to the network, a list of remote services that are usable to the local host;
a step in which, in response to the request from the local host, the list relaying host requests from the service administration host the list of remote services that are usable to the local host;
a step in which, in response to the request from the list relaying host, the service administration host recognizes each of the remote services that are usable to the local host;
a step in which the service administration host recognizes a remote host that is capable of sharing the recognized remote service with the local host;
a step in which the service administration host reports to the local host a service list that shows a combination of the remote service and the remote host; and
a step in which the local host displays the reported service list.

(Amended) The service software acquiring method according to any of claims 1-4 and 14, further comprising:
a step in which the local host requests, from a list relaying host which is connected to the network, a list of remote hosts that are accessible by the local host;
a step in which, in response to the request from the local host, the list relaying host requests from the service administration host the list of remote hosts that are usable to the local host;
a step in which, in response to the request from the list relaying host, the service administration host recognizes the remote hosts that are accessible by the local host;
a step in which the service administration host recognizes, with respect to each of the recognized remote hosts, a remote service that is shareable with the local host;
a step in which the service administration host reports to the local host a remote host list that shows a combination of the remote host and the remote service; and
a step in which the local host displays the reported remote host list.

(Amended) A service software acquiring system for executing a desired process between at least two or more electronic communication devices that are connected via a network, the system comprising:
a service administration host that is connected to the network and has stored therein software necessary for executing the desired process;
among the at least two or more electronic communication devices, a first electronic communication device operated by a user, and
a second electronic communication device that is capable of executing the desired process by operating in association with the first electronic communication device; and
association recognition means for recognizing an association between the first electronic communication device and the second electronic communication device,
wherein the first electronic communication device includes software acquisition meansfor,when executing the desired process, allowing the second electronic communication device recognized by the association recognitionmeans to acquire the software stored in the service administration host.

(Amended) The service software acquiring system according to claim 27, wherein the software acquisition means instructs the second electronic communication device selected by the user to download the software from the service administration host.

(Amended) The service software acquiring system according to claim 27, wherein the software acquisition means instructs the service administration host to transmit the software to the second electronic communication device selected by the user.

(New) The service software acquiring system according to claim 27, wherein when recognizing the association, the association recognition means recognizes the second electronic communication device that is capable of operating in association with the first electronic communication device by authenticating the user operating the first electronic communication device.

(New) The service software acquiring system according to claim 27, wherein the association recognition means is provided within a home server for a user who possesses the first electronic communication device.

(New) The service software acquiring system according to claim 27, wherein the association recognition means is provided within the service administration host.

(New) An electronic communication terminal that is connected to a network and which executes a predetermined process by operating in association with a remote host connected to the network, the terminal comprising:
information acquisition means for acquiring, from a computer device connected to the network, information as to remote hosts that are capable of executing the predetermined process in association;
remote host specificationmeans for, based on the information acquired by the information acquisition means, specifying a remote host that is capable of executing the predetermined process in association; and
software acquisition request means for causing the remote host specified by the remote host specification means to acquire software for executing the predetermined process, the software being stored in a service administration host connected to the network.

(New) The electronic communication terminal according to claim 33, further comprising user key acquisition means for acquiring a user key that is registered in a certificate authority host connected to the network, wherein
the software acquisition request means transmits the user key acquired by the user key acquisition means together with a request to acquire the software for executing the predetermined process.

(New) An electronic communication terminal that is connected to a network and which executes a predetermined process by operating in association with a local host connected to the network, the terminal comprising:
software acquisition request reception means for accepting, from the local host, a request to acquire software for executing the predetermined process; and
software acquisition means for downloading, from a service administration host connected to the network, the software for executing the predetermined process.

(New) The electronic communication terminal according to claim 35, further comprising user key check means for requesting a certificate authority host connected to the network to check a user key, wherein
in a case where the user key accompanies the request to acquire the software received by the software acquisition request reception means, if the user key check means checks the user key, the software acquisition meansdownloads, from theservice administration host, the software for executing the predetermined process.
